# EUROPEAN PATENT SPECIFICATION

(11) **EP 0 468 522 B1**
(45) Date of publication and mention of the grant of the patent: **04.10.1995**
(21) Application number: 91112603.5
(22) Date of filing: 26.07.1991
(51) Int. Cl.: G07C 9/00, A61B 5/117, G06K 9/00

(54) **A fingerprint photographing system**
System zum Photographieren von Fingerabdrücken
Système pour prendre une photographie d'une empreinte digitale

(30) Priority: 27.07.1990 JP 199866/90; 01.04.1991 JP 94698/91
(43) Date of publication of application: 29.01.1992
(73) Proprietor: YOZAN INC., Tokyo 155 (JP); SHARP CORPORATION, Osaka 545 (JP)
(72) Inventor: Kumagai, Ryohei, Bunkyo-ku, Tokyo 112 (JP); Maruta, Kazuo, Abeno-ku, Osaka 545 (JP)
(74) Representative: Grünecker, Kinkeldey, Stockmair & Schwanhäusser Anwaltssozietät

(56) References cited:
- EP-A- 0 173 972
- EP-A- 0 294 716
- EP-A- 0 376 663
- WO-A-86/06527
- WO-A-89/03099
- GB-A- 2 171 828

## Description

The present invention relates to a fingerprint photographing system as defined in the preamble of claim 1, which is provided for, for example, a fingerprint verification system.

Conventionally, a system to photograph a fingerprint of a finger contacted onto a surface of a prism by a video camera disposed to pick up light reflected at said surface of the prism is well-known as a fingerprint photographing system. An according system is known from EP-A-0 173 972 which serves to distinguish between a true fingerprint impression and a forged fingerprint impression. Such a distinction is known to be executed by a control section discriminating whether a stored reference grey level of a true background image is coincident with the grey levels of the background of each detected fingerprint.

In general, photographed image data of the fingerprint is input to a computer so as to be compared with the fingerprint (master data) stored in a memory, beforehand. Here, it is preferable that the image data of the fingerprint is as clear as possible. However, the data may not be clear enough due to the given pressure of a finger to the prism or perspiration on the surface of the finger. Therefore, it is necessary to properly select the data provided for the verification to the computer.

The present invention is invented so as to solve the above problems of the prior art and has an object to provide the fingerprint photographing system capable of obtaining image data of a clear fingerprint adapted to the fingerprint verification.

A fingerprint photographing system according to the present invention solving the above object comprises: a prism having a detection surface where a finger is to be contacted; a luminous source for irradiating light from the side of the finger surface onto said detection surface; a camera for detecting the light reflecting upon said detection surface; a means for comparing with a master data a fingerprint image picked up by said camera and is **characterised by** means for picking up by the camera an image before and after the contact of the finger and for storing the image of the fingerprint to a memory when the number of pixels with predetermined density differences is in the range of a fixed number.

Fig. 1 shows a block diagram of a fingerprint photographing system of an embodiment according to the present invention.
Fig. 2 shows a drawing zooming in on contact portions of the slanting surface of a right-angle prism.

The following reference signs are used in the drawings: 11.. prism, 12.. luminous source, 13...CCD camera, 14...slanting surface (detection surface).

Hereinafter, an embodiment of the fingerprint photographing system according to the present invention is described with referring to the attached drawings.

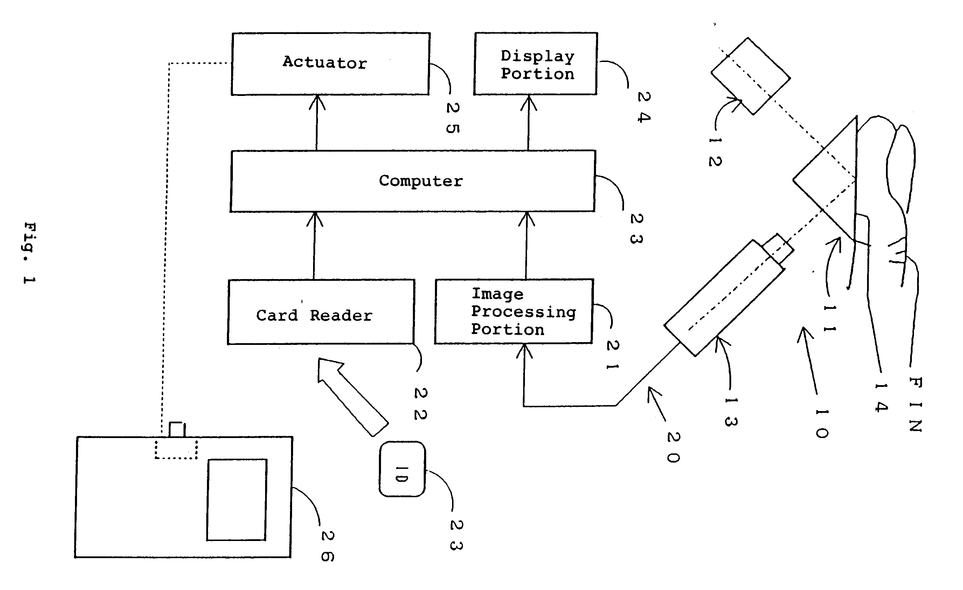

Fig. 1 shows a fingerprint verification system applying the fingerprint photographing system according to the present invention. The fingerprint verification system consists of an image input system 10 and a verficiation processing system 20. The comparison processing is performed onto the image photographed by the image input system 10 at the verification processing system 20. At the image input system 10, the total reflection of the illumination incident upon the right-angle prism 11 from the luminous source 12 is detected by the CCD camera 13. A slanting surface 14 of the prism 11 is used as the detection surface, where the finger FIN of which a fingerprint is to be detected is contacted on. Without the finger FIN being contacted, the whole illumination is totally reflected, so that the image detected by the CCD camera 13 is all in white.

The verification processing system 20 comprises an image processing portion 21 and a card reader 22. The master data is read when the person examined inserts an ID card 23 into the card reader 22, then the comparison is performed of the data input from the image input system 10 with the master data by the computer 23. The comparison results are displayed at display portion 24. When the comparison results come up to the standard (coincidence of the fingerprints), an actuator 25 is operated and a door 26 is opened.

Various specifying manners of the master data are adaptable, such as inputting of ID number by the person examined from the keyboard.

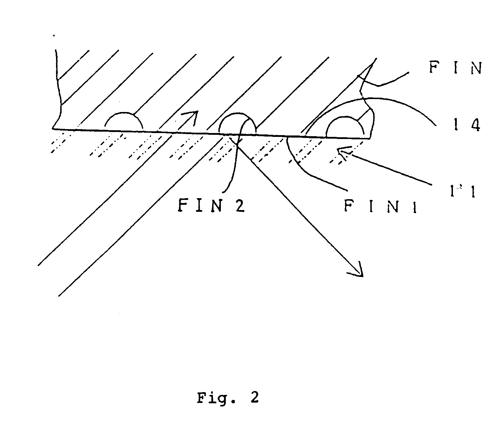

Fig. 2 zooms in on the contact portion of the slanting surface 14 of the right-angle prism 11 and the finger FIN. According to this figure, the protruded portion FIN1 of the finger contact to the slanting surface 14, while the hollowed portions FIN2 do not contact to the slanting surface 14. The illumination from the luminous source 12 refracts at the slanting surface 14, then is input to the CCD camera 13. Here, the angle of refraction with respect to the slanting surface 14 changes depending on the contacting condition of the finger FIN. Accordingly, the illumination totally reflects at the hollowed portions FIN2, so that these portions are detected as the bright area by the CCD camera 13. On the other hand, the illumination at the protruded portion FIN 1 does not totally reflect and passes through the interface of the prism, since the angle of refraction on the interface of the prism changes. Therefore, the protruded portions of the fingerprint are input to the CCD camera 13 at the dark lines with grey levels.

Accordingly, the portions which do not contact to the slanting surface 14 of the prism 11 are detected by the CCD camera 13 in the same brightness irrespective of their distances to the slanting surface 14. The hollowed portion FIN2 is never input to the CCD camera 13 as noise, and therefore, the fingerprint image is always obtainable with very distinct dark lines.

As it is mentioned above, the image before contacting the finger FIN onto the prism 11 is expressed all in white, while the image after contacting the finger FIN onto the prism 11 is expressed with dark lines corresponding to the finger print. This change of the image because of the fingerprint depends on the dampness of the surface of the finger FIN or the given pressure of the finger FIN to the detection surface of the prism 11. The clear image can be obtained when the finger with the moderate dampness is contacted to the prism 11 with an appropriate strength of the pressure.

According to the present embodiment, the determination of the clearness of the image to be accepted is performed as follows.

The densities of each pixel of an image data at the predetermined area of the image data input from the image processing portion 21 is determined by the computer 23. The density is expressed with 256 grey levels. When the number of pixels whose density difference before and after the contact of the finger is 15 or more levels is in the range of 30,000 to 35,000, the image data is considered to have the image clear enough to be stored in the memory of the computer 23 for the fingerprint verification. That is, when the area touched by the finger exceeds the above predetermined value, useful data can be surely obtained by photographing the finger. Blur of an image can be prevented by instructing to wait before reading data. Such an instruction can be executed by the method of instruction using voice synthesizing system, for example. The following data are ignored by the computer 23, and are not applied for the fingerprint verification.

Here, each of the above numerical value is just an example. It is possible to change the value according to the desired operations.

Furthermore, the luminous source 12 does not have to be of a special structure. The ordinal incandescent lamp will do. The CCD camera 13 can be replaced by the appropriate camera depending on its object.

As mentioned above, the fingerprint photographing system of the present invention is capable of obtaining clear image data of the fingerprint. This may simplify processing for fingerprint verification.

## Claims

1. A fingerprint photographing system comprising:
a prism (11) having a detection surface (14) where a finger is contacted on;
a luminous source (12) for irradiating light from the side of the finger suface onto said detection surface (14); a camera (13) for detecting the light reflected upon said detection surface (14); means for comparing with a master data a fingerprint image picked up by said camera (13) **characterised by**; means for picking up by the camera an image before and after the contact of the finger and for storing the image of the fingerprint to a memory when the number of pixels with predetermined density differences is in the range of a fixed number.

2. A fingerprint photographing system as claimed in claim 1, further comprising a card reader (22) for inputting data for identifying master data to be compared with said fingerprint.

3. A fingerprint photographing system as claimed in claim 1, further comprising an actuator (25) for opening a door.

4. A fingerprint photographing system as claimed in claim 1, further comprising a keyboard (23) for manually inputting an ID number.

5. A fingerprint photographing system as claimed in claim 1, wherein said density difference is 16 levels and said number is in the range of 30,000 to 35,000.

## Patentansprüche

1. Ein System zum Fotografieren von Fingerabdrücken mit:
einem Prisma (11) mit einer Nachweisoberfläche (14), auf der ein Kontakt mit einem Finger hergestellt wird;
einer Leuchtquelle (12) zum Einstrahlen von Licht von der Seite der Fingeroberfläche her auf die Nachweisoberfläche (14);
einer Kamera (13) zum Aufnehmen des an der Nachweisoberfläche (14) reflektierten Lichtes;
einer Vorrichtung zum Vergleichen eines durch die Kamera (13) aufgenommenen Fingerabdruckbildes mit Vorlagedaten,
**gekennzeichnet durch**
eine Vorrichtung zum Aufnehmen eines Bildes durch die Kamera vor und nach dem Herstellen des Kontaktes mit dem Finger und zum Speichern des Bildes des Fingerabdruckes in einem Speicher, wenn die Anzahl der Bildpunkte mit vorbestimmten Dichteunterschieden in dem Bereich einer festen Zahl ist.

2. Ein System zum Fotografieren von Fingerabdrücken nach Anspruch 1, das weiter einen Kartenleser (22) zum Eingeben von Daten zum Identifizieren von Vorlagendaten umfaßt, die mit dem Fingerabdruck zu vergleichen sind.

3. Ein System zum Fotografieren von Fingerabdrücken nach Anspruch 1, das weiter ein Stellglied (25) zum Öffnen einer Tür umfaßt.

4. Ein System zum Fotografieren von Fingerabdrücken nach Anspruch 1, das weiter eine Tastatur (23) zum manuellen Eingeben einer Identifizierungsnummer umfaßt.

5. Ein System zum Fotografieren von Fingerabdrücken nach Anspruch 1, wobei der Dichteunterschied 16 Stufen beträgt, und wobei die Anzahl in dem Bereich von 30.000 bis 35.000 liegt.

## Revendications

1. Système pour prendre une photographie d'une empreinte digitale comprenant :
un prisme (11) comportant une surface de détection (14) sur laquelle un doigt est mis en contact;
une source lumineuse (12) pour transmettre, sur ladite surface de détection (14), de la lumière venant de côté par rapport à la surface de doigt ; une caméra (13) pour détecter la lumière réfléchie sur ladite surface de détection (14) ; un moyen de comparaison, avec des données de base, de l'image de l'empreinte digitale captée par ladite caméra (13) caractérisé par un moyen pour capter, à l'aide de la caméra, une image avant et après le contact du doigt, et pour enregistrer l'image de l'empreinte digitale dans une mémoire, lorsque le nombre de pixels comportant des différences d'intensité prédéterminées se situe dans la fourchette d'un nombre fixé.

2. Système pour prendre une photographie d'une empreinte digitale selon la revendication 1, comprenant de plus un lecteur de carte (22) pour introduire des données en vue d'identifier des données de base à comparer avec ladite empreinte digitale.

3. Système pour prendre une photographie d'une empreinte digitale selon la revendication l,comprenant de plus un dispositif de commande (25) pour ouvrir une porte.

4. Système pour prendre une photographie d'une empreinte digitale selon la revendication 1, comprenant de plus un clavier (23) pour introduire manuellement un numéro d'identification ID.

5. Système pour prendre une photographie d'une empreinte digitale selon la revendication 1, dans lequel ladite différence d'intensité est de 16 niveaux et dans lequel ledit nombre se situe dans l'intervalle de 30 000 à 35 000.
